# EUROPÄISCHE PATENTSCHRIFT

(11) **EP 0 836 040 B1**
(45) Veröffentlichungstag und Bekanntmachung des Hinweises auf die Patenterteilung: **02.04.2003**
(21) Anmeldenummer: 97810620.1
(22) Anmeldetag: 02.09.1997
(51) Int. Cl.: F16J 15/32, F16J 15/44, F01D 11/02

(54) **Vorrichtung zur Dichtung eines Spaltes zwischen Rotor und Gehäuse einer Strömungsmachine**
Device for sealing a gap between rotor and casing of a turbo machine
Dispositif d'étanchéité pour l'espace existant entre le rotor et le châssis d'une turbomachine

(30) Priorität: 25.09.1996 DE 19639328
(43) Veröffentlichungstag der Anmeldung: 15.04.1998
(73) Patentinhaber: ALSTOM (Switzerland) Ltd, 5401 Baden (CH)
(72) Erfinder: Busse, Ludwig, Dr., 69493 Hirschberg (DE); Meylan, Pierre, 5432 Neuenhof (CH)

(56) Entgegenhaltungen:
- EP-A- 0 355 649
- EP-A- 0 567 392
- DE-A- 2 344 666
- GB-A- 2 301 635
- US-A- 5 181 728

## Beschreibung

### Technisches Gebiet

Die vorliegende Erfindung betrifft eine Vorrichtung gemäss Oberbegriff des Anspruchs 1.

### Stand der Technik

Bürstendichtungen, insbesondere für Dampfturbinen, welche den betriebsnotwendigen Spalt zwischen Rotor und Gehäuse einer Strömungsmaschine erfassen, müssen Druckdifferenzen aufnehmen, welche ein Vielfaches dessen betragen, was beispielsweise bei Gasturbinen auftreten. Bei Dampfturbinen treten üblicherweise Druckdifferenzen in der Grössenordnung von 20 MPa auf, was eine 8-fache Druckdifferenz gegenüber den anzutreffenden Verhältnissen bei Gasturbinen ausmacht. Eine übliche Lösung zur Abdichtung des Spaltes bei Dampfturbine besteht darin, eine Anzahl in Bürstendichtringe intergrierte Borsten in Serie zu schalten. Weil dies regelmässig mit einem Durchsichtslabyrinth nicht genügt, die Spaltleckage in akzeptablen Grenzen zu halten, wird darüber hinaus noch ein doppeltes Labyrinth, ein sogenanntes Doppellabyrinth, vorgesehen, welches dann die nötige Verbesserung bringt. Allerdings ist es so, dass auch bei solchen Vorkehrungen die Abstände zwischen Bürstendichtringen und Rotor knappe Abstände erfordert, welche in der Grössenordnung von 1 mm liegen. Bedingt durch Wärmespannungen entfalten die Gehäusewandungen von Dampfturbinen allerdings die negative Wirkung, sich mit der Zeit gegenüber dem Rotor zu verformen oder sonst atypische Positionen einzunehmen. Wenn nun der Abstand zwischen einem Bürstendichtring und dem Rotor anfänglich zur Minimierung der Spaltleckage auf nur etwa 1 mm disponiert wird, muss beim Oeffnen der Maschine, wie dies üblicherweise bei einer Revision der Fall ist, unweigerlich zu einer Beschädigung der Bürstendichtung, d.h. insbesondere der Frontflächen, und deren Funktionalität kommen, denn die hierzu auftretenden masslichen Verformungen in der Trennebene betragen regelmässig ein Vielfaches des anfänglich vorgesehenen Spiels. Danebst darf nicht ausser acht gelassen werden, dass die Wärmespannungen noch andere negative Einflüsse auf das Gehäuse ausüben können, welche die Funktionstüchtigkeit der Bürstendichtung mehr oder minder schmälern. Ohne Anspruch auf Vollständigkeit sind folgende negative Einflüsse aufzuzählen:
a) Ovalisierung des Gehäuses;
b) Verschiebung der Rotor- zur Gehäuseachse;
c) Anteil der Schwingungsamplitude beim Durchfahren der kritischen Drehzahl;
d) Dehnung des Rotors infolge der Fliehkraft;
e) Differenzdehnung zwischen Rotor und Gehäuse infolge Temperaturunterschiede;
f) Schrumpfringeinfluss beim Montagezustand;
g) Schrumpfänderung zwischen Montage- und Betriebszustand;
h) Differenzdehnungsunterschiede über alle Segmentringe;
i) Summe aller spielverkleinernden Herstellungstoleranzen;
j) Abweichung von der Kreisform durch die Trennschnitte, die zur bereits genannten Ovalisierung des Gehäuses führt.

Zur Beherrschung dieser Einflüsse müsste das Spiel zwischen Bürstendichtringen und Gehäuse um ein Vielfaches vergrössert werden, was wiederum grosse Wirkungsgradsverluste mit sich brächte.

Aus EP 0 453 315 B1 ist eine aus Bürstendichtringen zusammengesetzte Bürstendichtung zur Bewerkstelligung einer Dichtung zwischen einem Rotor und einem Gehäuse einer Strömungsmaschine bekanntgeworden. Bei diesem Vorschlag ist der Bürstendichtring rotorseitig mit einer Verstärkungsplatte versehen, welche auch rotorseitig mit einer Schicht eines abtragbaren Materials ergänzt ist. Damit soll erreicht werden, dass bei anfänglich minimierten Spaltgrössen eine Möglichkeit geschaffen wird, die immer wieder auftretenden negativen Einflüsse gemäss obiger Auflistung (a-j) durch einen bei Bedarf einsetzenden Abrieb des abtragbaren Materials der Verstärkungsplatte aufzufangen.

Diese Möglichkeit weist indessen Nachteile auf, die darin bestehen, dass das abtragbare Material eine äusserst kleine Reibfestigkeit aufweisen muss, soll der Widerstand auf eine Vergrösserung des Spiels gering ausfallen. Aber selbst wenn diese Voraussetzungen optimal erfüllt werden, so bleibt dem ganzen Konzept aus dieser Druckschrift ein fundamentaler Nachteil behaftet, der darin zu sehen ist, dass jeder Abrieb grundsätzlich durch eine neue Beschichtung ersetzt werden müsste, will man das ursprüngliche vorgesehene Spiel nicht aufgeben. Dass dies in der Praxis mit einem vernünftigen Aufwand nicht zu machen ist, liegt auf der Hand, abgesehen davon, dass eine Beschädigung der Bürstendichtringe, der Borsten und des Rotors trotzdem nicht ausgeschlossen werden kann, denn der Abrieb bildet im Grunde genommen eine spanabhebende Operation, bei welcher der Rotor die Funktion des spanabhebenden Werkzeuges übernimmt.

US-A-5,181728 offenbart Bürstendichtungen, welche zwischen einem Rotor und einem Stator einer Strömungsmaschine angeordnet sind, wobei Vorsprünge am Rotor vorgesehen sind, die sich in Richtung zu den Halteringen erstrecken.

Die Offenlegungsschrift GB-A-2 301 635 offenbart ebensolche Bürstendichtungen. Die einzelnen Bürsten sind an einem Dichtungsring befestigt. Der Dichtungsring ist gegenüber dem Stator elastisch mit einer Feder gelagert und weist sich in Richtung zur Oberfläche des Rotors erstreckende Rippen auf.

Eine Abdichtung gemäß Oberbegriff des Anspruchs 1 ist bereits aus der DE-A-23 44 666 bekannt.

### Darstellung der Erfindung

Der Erfindung, wie sie im Anspruch 1 gekennzeichnet ist, liegt die Aufgabe zugrunde, bei einer Vorrichtung der eingangs genannten Art die Leckströmung noch weiter zu vermindern. Vorteilhafte und zweckmässige Weiterbildungen sind in den abhängigen Ansprüchen gekennzeichnet.

Durch den Einbau der Bürstendichtungen in elastisch, radial gelagerten Segmenten, welche auf Druck des Rotors eine Nachgiebigkeit der Bürstendichtringe gewährleisten, kann der zu dichtende Spalt minimiert werden, ohne Gefahr zu laufen, dass bei Auftreten eines Zustandes gemäss den oben aufgelisteten negativen Einflüssen a-j eine Beschädigung des Bürstendichtringes, der Borsten, insbesondere deren Lippen, sowie des Rotors selbst entstehen kann.

Die wesentlichen Vorteile der Erfindung sind darin zu sehen, dass der Betrieb einer solchen Strömungsmaschine mit nunmehr kleinsten Spalten zwischen Bürstendichtring und Rotor realisiert werden kann. Die dafür vorgesehenen Segmente in Umfangsrichtung des Gehäuses können jederzeit die Verformung des Gehäuses, eine Verlagerung des Rotors, etc., bei niedrigen Drehzahlen durch elastisches Nachgeben der Segmente auffangen, ohne dass dadurch die Bürstendichtringe und/oder die Lippen der Borsten beschädigt werden.

Ueblicherweise wird ein Segment ein Arcus in der Grössenordnung von 30-45° bezogen auf den inneren Umfang des Gehäuses aufweisen und ausserdem mit mehreren nebeneinander angeordneten Bürstendichtringen bestückt sein. Dies schliesst aber nicht aus, jeden Bürstendichtring einzeln abzufedern, wobei hier darauf geachtet werden muss, dass die gehäuseseitigen Schweissnähte zur Fixierung der einzelnen Borsten entlastet bleiben. Dies lässt sich erreichen, indem die Federkraft auf die Stirnfläche der einzelnen Bürstendichtringe, um die Schweissnaht herum, eingeleitet wird. Bei der Verbundlösung von mehrerern nebeneinander geordneten Bürstendichtringen lässt sich die Einleitung der Federkraft und der Druckdifferenzen in radialer Richtung über das übergeordnete Segment ohne Belastung der Schweissnähte einwandfrei erreichen.

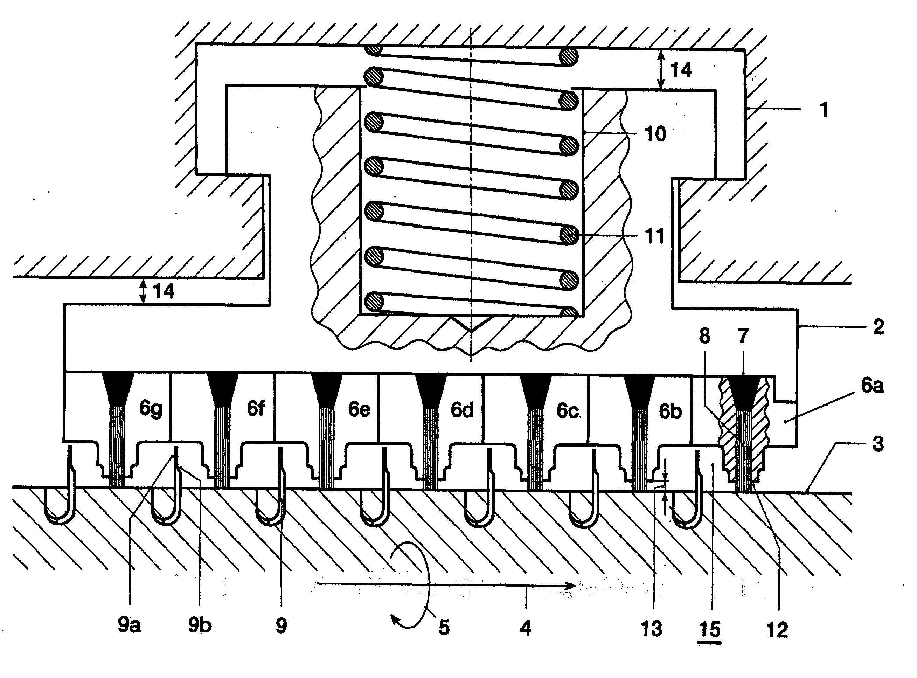

Im folgenden wird anhand der Zeichnung ein Ausführungsbeispiel der Erfindung näher erläutert. Alle für das unmittelbare Verständnis der Erfindung nicht erforderlichen Elemente sind fortgelassen worden.

### Kurze Beschreibung der Zeichnung

Die einzige Figur zeigt ein gefedertes Segment, das mit einer Anzahl von Bürstendichtringen bestückt ist, wobei diese Bürstendichtung einen Rotorteil einer Strömungsmaschine erfasst.

### Wege zur Ausführung der Erfindung, gewerbliche Verwendbarkeit

Die Figur zeigt den Aufbau einer Bürstendichtung eines Rotors 3 einer Strömungsmaschine. Als Strömungsmaschine stehen hier im Vordergrunde Gas- und Dampfturbinen. Der Aufbau der hier gezeigten und beschriebenen Bürstendichtung ist typisch für die anzutreffenden Verhältnisse bei Dampfturbinen, bei welchen die Druckdifferenzen in Strömungsrichtung 4 besonders gross ausfallen. Dessen ungeachtet, dieser Aufbau lässt sich vorzüglich auch auf andere Strömungsmaschinen übertragen, und zwar immer dort, wo der Spalt zwischen Bürstendichtring und Rotor minimiert werden soll. Die aus der Figur ersichtliche Bürstendichtung wird jeweils intermediär zwischen zwei arbeitenden Sektoren der Strömungsmaschine angeordnet, und hat bestimmungsgemäss die Aufgabe zu erfüllen, eine schädliche Strömung des Arbeitsmediums zwischen den beiden Sektoren maximal zu unterbinden, was sich bei positiver Umsetzung dieser Massnahme unmittelbar erhöhend auf den Wirkungsgrad der Anlage auswirkt.

Ein Segment 2 umfasst eine Anzahl nebengeordneter Bürstendichtringe 6a-g, welche die zu dichtende Strecke des Rotors 3 erfassen, wobei dieses Segment 2, wie aus der Drehrichtung 5 des Rotors hervorgeht, von ringförmiger Gestaltung ist. Das Segment steht radial in einer federnden Interdependenz zum Gehäuse 1 der Strömungsmaschine. Diese federnde Interdependenz wird durch eine Feder 11 erstellt, welche in einer Bohrung des Segmentes 2 aufliegt, und radial gegen das Gehäuse 1 drückt. Zwischen Segment 2 und Gehäuse 1 ist ein Spalt 14 vorgesehen, welcher die maximale Einfederung der Feder 11 bestimmt, wobei diese Einfederung, wie aus der Figur hervorgeht, immer zu einer Verkleinerung des Spaltes 14 und zu einer theoretischen Vergrösserung des komplementären Spaltes 13 zwischen Frontfläche 12 der Bürstendichtringe 6a-g und Rotor 3 führt. In Tat und Wahrheit setzt eine Verkleinerung des Spaltes 14 immer dann ein, wenn der Rotor 3 in irgendeiner Form gegen die Bürstendichtringe 6a-g drückt. In jedem Bürstendichtring 6a-g wird ein Paket von Borsten 8 eingelassen und durch eine gehäuseseitig angebrachte Schweissnaht 7 radial fixiert. Ein bestimmte Höhe der Borsten 8 ragen aus den Bürstendichtringen 6a-g heraus und überbrücken dann den betriebsmässigen Spalt 13 zwischen Frontfläche 12 der Bürstendichtringe 6a-g und Rotor 3. Weil die einzelnen Borsten 8 gegenüber der Oberfläche des Rotors 3 in herkömmlicher Weise schräg in Umfangsrichtung verlaufen, sind sie auf Druck, d.h. auf eine Verkleinerung des Spaltes 13, elastisch nachgiebig, ohne dass dadurch die von den Borsten 8 ausgehende Dichtheit auch nur minimal eingeschränkt wird. Zwischen den einzelnen Borsten 8 weisen die benachbarten Bürstenringe 6a-g Kammern 15 auf, welche von dem schlanken radialen Auslauf der Bürstendichtringe 6a-g im Bereich deren Frontfläche 12 gebildet werden. Zur weiteren Verminderung der Leckströmung über den Rotor 3 werden innerhalb dieser Kammern 15 Dichtstreifen 9 eingebaut, welche vorzugsweise aus Blechstreifen bestehen und in Nuten im Rotor 3 eingestemmt werden. Diese Dichtstreifen 9 werden in der Regel so eingebaut, dass der Stemmdraht 9a auf der Seite des höheren Druckes liegt. Demgegenüber ist die Anschärfung 9b des Dichtstreifens 9 auf der dem Stemmdraht 9a abgewandten Seite anzubringen. Selbstverständlich ist der verbleibenden Zwischenraum zwischen der Spitze der Anschärfung 9b und der oberen Fläche der Kammer 15 mindestens so gross wie der Spalt 13 zwischen Frontfläche 12 der Bürstendichtringe 6a-g und Rotor 3.

Die hier über den Umfang des Segmentes 2 im Verbund abgefederten Bürstendichtringe 6a-g lassen sich auch einzeln abfedern, wobei dann allerdings zu beachten ist, dass die Dynamik der einzelnen Federn nicht zu einer Verletzung der Schweissnähte 7 führen kann. Eine solche Möglichkeit einzeln abgefederter Bürstendichtringe ist immer dort angebracht, wo gleichförmige resp. gleichmässige Verhältnisse bezüglich des Rotors 3 oder des Gehäuses 1 nicht anzutreffen sind.

Unabhängig davon, welche Variante zum Einsatz gelangt, ist die nachgiebige Wirkung der Bürstenringe 6a-g gegenüber einem Wachsen oder einer Ovalisierung des Gehäuses 1 über den anfänglich vorgesehenen Spalt 13 die Gleiche. Sobald die Oberfläche des Rotors 3 auf die Frontfläche 12 eines Bürstendichtringes 6a-g anstösst, tritt die Wirkung der Feder 11 in Funktion, welche die in irgendeiner Form stattfindende Auslenkung des Rotors 3 ohne Beschädigung für die beiden aneinander stossenden Flächen nachgiebig auffängt.

### Bezugszeichenliste

- 1: Gehäuse
- 2: Segment
- 3: Rotor
- 4: Strömungsrichtung
- 5: Drehrichtung des Rotors
- 6a-f: Bürstendichtringe
- 7: Schweissnaht
- 8: Borsten
- 9: Dichtstreifen
- 9a: Stemmdraht
- 9b: Anschärfung
- 10: Bohrung
- 11: Feder, Federelement
- 12: Frontfläche des Bürstendichtringes
- 13: Spalt zwischen Frontfläche 12 und Rotor 3
- 14: Spalt zwischen Segment 2 und Gehäuse 1
- 15: Kammer

## Patentansprüche

1. Vorrichtung zur Dichtung eines Spaltes (13) zwischen einem Rotor (3) und einem Gehäuse (1) einer Strömungsmaschine und zwischen einer Seite höheren und einer Seite geringeren Drucks, wobei der Spalt (13) mit mehreren mit Borsten (8) bestückten Bürstendichtringen (6a-g) überbrückbar ist, wobei die Borsten (8) von der rotorseitigen Frontfläche des jeweiligen Bürstendichtringes (6a-g) vorstehen und dichtend auf dem Rotor (3) aufliegen, wobei die Bürstendichtringe (6a-g) in radialer Ebene gegenüber dem Rotor (3) durch eine zwischen den Bürstendichtringen (6a-g) und dem Gehäuse (1) wirksame Feder (11) elastisch nachgiebig gelagert sind,
**dadurch gekennzeichnet, dass**
zwischen den einzelnen Bürstendichtringen (6a-g) in Nuten des Rotors (3) eingestemmte Dichtstreifen (9) angeordnet sind, welche in radialer Ebene den Spalt (13) von einer axialen Strömung (4) abschirmen.

2. Vorrichtung nach Anspruch 1, **dadurch gekennzeichnet, dass** die Dichtstreifen (9) aus Blechstreifen bestehen.

3. Vorrichtung nach Anspruch 1 oder 2, **dadurch gekennzeichnet, dass** die Dichtstreifen (9) auf der Seite des geringeren Drucks eine Anschärfung (9b) aufweisen.

4. Vorrichtung nach Anspruch 1, **dadurch gekennzeichnet, dass** die Bürstendichtringe (6a-g) rotorseitig die Borsten (8) lippenförmig umschliessen.

5. Vorrichtung nach Anspruch 1, **dadurch gekennzeichnet, dass** die Bürstendichtringe (6a-g) in einem Winkel von 30° bis 45° über den Umfang segmentiert sind.

## Claims

1. Appliance for sealing a gap (13) between a rotor (3) and a casing (1) of a turbomachine and between a side of higher and a side of lower pressure, the gap (13) being bridgeable by a plurality of brush seal rings (6a-g) equipped with bristles (8), the bristles (8) protruding from the rotor-side front surface of the respective brush seal ring (6a-g) and being in sealing contact with the rotor (3), the brush seal rings (6a-g) being supported so that they are elastically flexible relative to the rotor (3) by means of a spring (11), which is effective between the brush seal rings (6a-g) and the casing (1), **characterized in that** sealing strips (9), which are caulked into grooves in the rotor (3), are arranged between the individual brush seal rings (6a-g), which sealing strips (9) screen the gap (13) in a radial plane from an axial flow (4).

2. Appliance according to Claim 1, **characterized in that** the sealing strips (9) consist of sheet-metal strips.

3. Appliance according to Claim 1 or 2, **characterized in that** the sealing strips (9) have scarfing (9b) on the lower-pressure side.

4. Appliance according to Claim 1, **characterized in that** the brush seal rings (6a-g) encompass the bristles (8) in the form of lips on the rotor side.

5. Appliance according to Claim 1, **characterized in that** the brush seal rings (6a-g) are segmented with an angle of between 30° and 45° over the periphery.

## Revendications

1. Dispositif d'étanchéité pour un espace (13) entre un rotor (3) et un châssis (1) d'une turbomachine et entre un côté à plus haute pression et un côté à plus basse pression, dans lequel l'espace (13) peut être occupé par plusieurs joints d'étanchéité à brosses (6a-g) garnis de brosses (8), dans lequel les brosses (8) sont saillantes dans la face frontale du joint d'étanchéité à brosses respectif (6a-g) et s'appliquent de façon étanche sur le rotor (3), dans lequel les joints d'étanchéité à brosses (6a-g) sont supportés élastiquement dans un plan radial par rapport au rotor (3) par un ressort (11) agissant entre les joints d'étanchéité à brosses (6a-g) et le châssis (1), **caractérisé en ce que** des bandes d'étanchéité (9) encastrées dans des rainures du rotor (3) sont disposées entre les joints d'étanchéité à brosses individuels (6a-g), qui protègent dans le plan radial l'espace (13) contre un écoulement axial (4).

2. Dispositif suivant la revendication 1, **caractérisé en ce que** les bandes d'étanchéité (9) sont constituées de bandes de tôle.

3. Dispositif suivant la revendication 1 ou 2, **caractérisé en ce que** les bandes d'étanchéité (9) présentent un biseau (9b) sur le côté de la plus basse pression.

4. Dispositif suivant la revendication 1, **caractérisé en ce que** les joints d'étanchéité à brosses (6a-g) entourent les brosses (8) en forme de lèvres du côté du rotor.

5. Dispositif suivant la revendication 1, **caractérisé en ce que** les joints d'étanchéité à brosses (6a-g) sont segmentés sur la périphérie avec un angle de 30° à 45°.
